# EUROPÄISCHE PATENTSCHRIFT

(11) **EP 1 116 129 B1**
(45) Veröffentlichungstag und Bekanntmachung des Hinweises auf die Patenterteilung: **13.06.2007**
(21) Anmeldenummer: 99969515.8
(22) Anmeldetag: 10.09.1999
(51) Int. Cl.: G06F 15/78, G06F 9/302

(54) **KONFIGURIERBARER HARDWARE-BLOCK**
CONFIGURABLE HARDWARE BLOCK
BLOC-MATERIEL CONFIGURABLE

(30) Priorität: 23.09.1998 DE 19843663
(43) Veröffentlichungstag der Anmeldung: 18.07.2001
(73) Patentinhaber: Infineon Technologies AG, 81669 München (DE)
(72) Erfinder: ARNOLD, Ralf, D-85586 Poing (DE); KLEVE, Helge, D-85290 Geisenfeld (DE); SIEMERS, Christian, D-31139 Hildesheim (DE)
(74) Vertreter: Jannig, Peter
(86) Internationale Anmeldenummer: PCT/DE1999/002891
(87) Internationale Veröffentlichungsnummer: WO 2000/017772

(56) Entgegenhaltungen:
- EP-A- 0 825 540
- WO-A-97/07466
- DE-A- 19 614 991

## Beschreibung

Die vorliegende Erfindung betrifft einen konfigurierbaren Hardware-Block, der dazu ausgelegt ist, abhängig von seiner Konfiguration in einer Speichereinrichtung gespeicherte Daten auszulesen, die ausgelesenen Daten arithmetisch und/oder logisch zu verarbeiten, und das Ergebnis der Verarbeitung repräsentierende Daten in die Speichereinrichtung einzuschreiben, und der in die Lage versetzbar ist, mit externer Hardware zu interagieren.

Konfigurierbare Hardware-Blöcke sind seit langem in einer Vielzahl von Ausführungsformen bekannt. Zu ihnen zählen unter anderem die sogenannten feldprogrammierbaren Logikbausteine wie PALs (programmable array logic), GALs (Generic array logic) etc.

Konfigurierbare Hardware-Blöcke können auch in programmgesteuerten Einheiten zum Einsatz kommen; es ist bekannt, sie in den sogenannten >S<putern einzusetzen.

Programmgesteuerte Einheiten wie Mikroprozessoren, Mikrocontrollern etc. waren bis vor kurzem nahezu ausschließlich nach dem bekannten Von-Neumann-Modell konzipiert. Zwar wurde (beispielsweise im Harvard-Modell) davon abgerückt, getrennte Code- und Datenspeicherbereiche vorzusehen, doch erfolgt die Ausführung der Befehle (der damit verbundenen Aktionen bzw. Operationen) selbst heutzutage noch fast ausschließlich rein sequentiell.

Die sequentielle Abarbeitung der Befehle begrenzt die maximale Rate, mit welcher diese abgearbeitet werden können.

Eine besonders hohe Rate läßt sich durch die sogenannten RISC-Prozessoren erzielen. Diese weisen einen reduzierten Befehlssatz auf und ermöglichen es dadurch, die Mikroprogramme, unter Verwendung welcher die abzuarbeitenden Befehle üblicherweise decodiert und ausgeführt werden, durch fest verdrahtete Hardware zu ersetzen. Dies wiederum gestattet es, besonders schnell und effizient arbeitende Befehls-Pipelines und Befehls-Ausführungseinheiten zu realisieren, so daß im Mittel bis zu ein Befehl pro Prozessortakt zur Ausführung gebracht werden kann. Wegen der nach wie vor vorhandenen Abarbeitungs- und Ergebnissequentialität kann jedoch auch mit RISC-Prozessoren nicht mehr als ein Befehl pro Prozessortakt ausgeführt werden.

Eine programmgesteuerte Einheit, in welcher mehr als ein Befehl pro Prozessortakt abgearbeitet werden kann, ist der vorstehend bereits erwähnte >S<puter. Ein solcher >S<puter ist beispielsweise in der EP 0 825 540 A1 beschrieben.

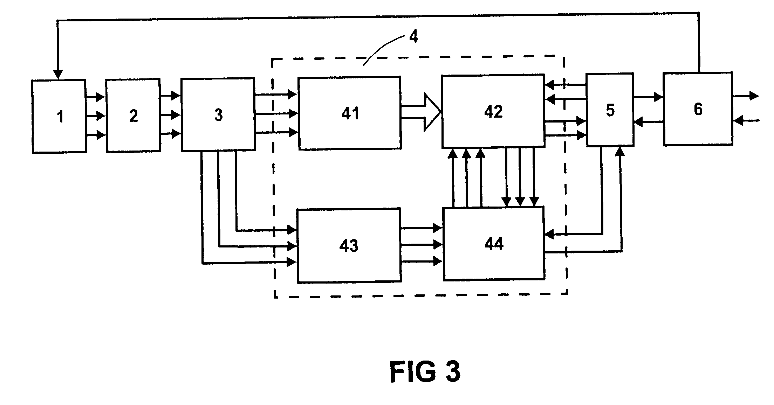

Der grundlegende Aufbau eines >S<puters ist in Figur 3 gezeigt und wird nachfolgend unter Bezugnahme hierauf beschrieben.

Der Vollständigkeit halber sei bereits an dieser Stelle darauf hingewiesen, daß der >S<puter, insbesondere dessen die Befehle abarbeitende Teil nur teilweise (nur so weit es für die vorliegend näher betrachteten konfigurierbaren Hardware-Blöcke von Bedeutung ist) dargestellt und beschrieben ist.

Der >S<puter gemäß Figur 3 umfaßt eine Vordecodier-Einheit (predecode unit) 1, einen Instruktions-Puffer (instruction buffer) 2, eine Decodier-, Umbenennungs- und Lade-Einheit (decode, rename & load unit) 3, eine s-Paradigmen-Einheit (s-unit) 4, einen Daten-Cache (data cache) 5, und eine Speicher-Schnittstelle (memory interface) 6, wobei die s-unit 4 aus einem Strukturprogrammier-Puffer (programmable structure buffer) 41, einer Funktionseinheit mit programmierbarer Struktur (functional unit with programmable structure) 42, einem Integer/Adreßinstruktions-Puffer (integer/address instruction buffer) 43 und einem Registerblock (integer register file) 44 besteht.

Die Besonderheit des >S<puters besteht insbesondere in dessen s-unit 4, genauer gesagt in der functional unit 42 derselben. Die functional unit 42 ist eine strukturierbare Hardware, die basierend auf vom >S<puter auszuführenden Instruktionen oder Instruktionsfolgen dynamisch so konfigurierbar ist, daß sie die durch die Instruktionen oder Instruktionsfolgen vorgegebenen Aktionen bzw. Operationen ausführen kann.

Vom >S<puter auszuführende Instruktionen (genauer gesagt diese repräsentierende Code-Daten) gelangen aus einem nicht gezeigten Speicher über das memory interface 6 in die predecode unit 1, wo sie vordecodiert werden; dabei können zu den Code-Daten beispielsweise Informationen hinzugefügt werden, die die spätere Decodierung in der decode, rename & load unit 3 erleichtern. Die Code-Daten gelangen dann über den instruction buffer 2 in die decode, rename & load unit 3, wo die Ausführung der durch die Code-Daten repräsentierten Instruktionen vorbereitet wird. Diese Vorbereitung umfaßt die Decodierung der Code-Daten, die Konfigurierung bzw. Strukturierung der functional unit 42, die Initialisierung bzw. Verwaltung des integer register file 44, und das Starten der wunschgemäß konfigurierten functional unit 42.

Die Strukturierung bzw. Konfigurierung der functional unit 42 erfolgt unter Verwendung von die gewünschte Konfiguration repräsentierenden Konfigurations-Daten, die von der decode, rename & load unit 3 in den programmable structure buffer 41 geschrieben werden. Diese, die gewünschte Konfiguration repräsentierenden Konfigurations-Daten werden in der decode, rename & load unit 3 kreiert; sie können aber auch schon in codierter Form in den Code-Daten enthalten sein.

Die functional unit 42 ist dazu ausgelegt, Daten aus dem register file 44 und/oder dem data cache 5 auszulesen, die ausgelesenen Daten arithmetisch und/oder logisch zu verarbeiten, und das Ergebnis der Verarbeitung repräsentierende Daten in das register file 44 und/oder den data cache 5 einzuschreiben; sie (die functional unit 42) ist damit ein konfigurierbarer Hardware-Block gemäß dem Oberbegriff des Patentanspruchs 1.

Bei geeigneter Initialisierung des register file 44 und bei geeigneter Konfigurierung der functional unit 42 hat der Betrieb der functional unit 42 die Vornahme von Aktionen bzw. Operationen zu Folge, die durch die Ausführung der Instruktionen, auf der Basis welcher die Initialisierung des register file 44 und die Konfigurierung der functional unit 42 erfolgten, zu bewirken sind.

Die Vornahme der durch die Ausführung von Instruktionen zu bewirkenden Aktionen durch eine entsprechend konfigurierte Hardware (die functional unit 42) ist bekanntlich bedeutend schneller als die Ausführung der Instruktionen in den "normalen" Arithmetisch-Logischen Einheiten (ALUs) von herkömmlichen programmgesteuerten Einheiten. Dies gilt in besonderem Maße für den Fall, daß die Hardware (die functional unit 42) so konfiguriert ist, daß durch deren Betrieb ein Ergebnis erzielbar ist, das der Ausführung mehrerer aufeinanderfolgender Instruktionen (einer mehrere Instruktionen umfassenden Makroinstruktion) entspricht.

Bezüglich weiterer Einzelheiten zum Aufbau, der Funktion und der Wirkungsweise von >S<putern wird auf die vorstehend bereits erwähnte EP 0 825 540 A1 verwiesen.

Der Vollständigkeit halber sei angemerkt, daß nicht alle Aktionen, die durch die vom >S<puter auszuführenden Instruktionen zu bewirken sind, durch die functional unit 42 ausführbar sind. Instruktionen wie insbesondere zur Programmablaufsteuerung bzw. Kontrollflußsteuerung dienende Instruktionen wie beispielsweise Branch-, Jump-, No-Operation-, Wait- und Stop-Instruktionen werden in der Regel auf herkömmliche Art und Weise ausgeführt werden.

Nichtsdestotrotz kann durch die Verwendung konfigurierbarer Hardware-Blöcke wie der functional unit 42 im allgemeinen eine höhere Anzahl von durch auszuführende Befehle zu bewirkenden Aktionen pro Zeiteinheit ausgeführt werden als es mit herkömmlichen programmgesteuerten Einheiten der Fall ist, also mehr als ein Befehl pro Prozessortakt abgearbeitet werden.

Allerdings gibt es auch Anwendungen, bei denen die Anzahl der pro Zeiteinheit ausführbaren Aktionen durch das Vorsehen von Hardware-Blöcken der vorstehend beschriebenen Art nicht steigerbar ist.

Weitere konfigurierbare Hardware-Blöcke sind aus der WO-A-97/07466 und der DE-A-19614991 bekannt.

Der vorliegenden Erfindung liegt daher die Aufgabe zugrunde, einen konfigurierbaren Hardware-Block zu schaffen, der flexibler und/oder universeller einsetzbar ist als herkömmliche konfigurierbare Hardware-Blöcke.

Diese Aufgabe wird erfindungsgemäß durch die in den Ansprüchen 1 und 2 beanspruchten konfigurierbaren Hardware-Blöcke gelöst.

Die beanspruchten Hardware-Blöcke weisen eine gesteigerte Leistungsfähigkeit und erweiterte Verwendungsmöglichkeiten auf; solche Hardware-Blöcke sind dadurch flexibler und universeller einsetzbar als herkömmliche Hardware-Blöcke.

Vorteilhafte Weiterbildungen der Erfindung sind den Unteransprüchen, der folgenden Beschreibung und den Figuren entnehmbar.

Die Erfindung wird nachfolgend anhand eines Ausführungsbeispiels unter Bezugnahme auf die Figuren näher erläutert. Es zeigen
- Figur 1: den prinzipiellen Aufbau des nachfolgend näher beschriebenen Hardware-Blocks,
- Figur 2: den Hardware-Block gemäß Figur 1 in einem für eine bestimmte Anwendung strukturierten Zustand, und
- Figur 3: den prinzipiellen Aufbau eines >S<puters.

Der nachfolgend näher betrachtete Hardware-Block ist ein konfigurierbarer Hardware-Block, der dazu ausgelegt ist, abhängig von seiner Konfigurierung in einer Speichereinrichtung gespeicherte Daten auszulesen, die ausgelesenen Daten arithmetisch und/oder logisch zu verarbeiten und das Ergebnis der Verarbeitung repräsentierende Daten in die Speichereinrichtung einzuschreiben; er ist darüber hinaus in die Lage versetzbar, selbständig mit externer Hardware zu interagieren und wird dadurch zu einem Hardware-Block, welcher sowohl innerhalb programmgesteuerter Einheiten (beispielsweise als functional unit eines >S<puters) oder sonstiger Einrichtungen als auch als eigenständige (ohne über- oder nebengeordnete Steuereinrichtungen auskommende) Einheit flexibel und universell verwendbar ist und deshalb im folgenden als UCB (Universal Configurable Block) bezeichnet wird.

Die Speichereinrichtung, aus welcher der UCB Daten ausliest und in welche der UCB Daten einschreibt, kann innerhalb oder außerhalb des UCB vorgesehen sein; im vorliegend betrachteten Beispiel wird die Speichereinrichtung durch das register file 44 des >S<puters gemäß Figur 3 gebildet.

Die Schreib- und Lesezugriffe des UCB auf die Speichereinrichtung erfolgen vorzugsweise getaktet. Der UCB selbst ist ein asynchrones Schaltnetz zwischen den Aus- und Eingängen der Speichereinrichtung; die Bestandteile des UCB sind asynchron miteinander gekoppelt.

Die Speichereinrichtung ist vorzugsweise von außerhalb des UCB vor Inbetriebnahme desselben initialisierbar; denkbar wäre auch, daß der UCB die Initialisierung der Speichereinrichtung selbst veranlaßt oder durchführt.

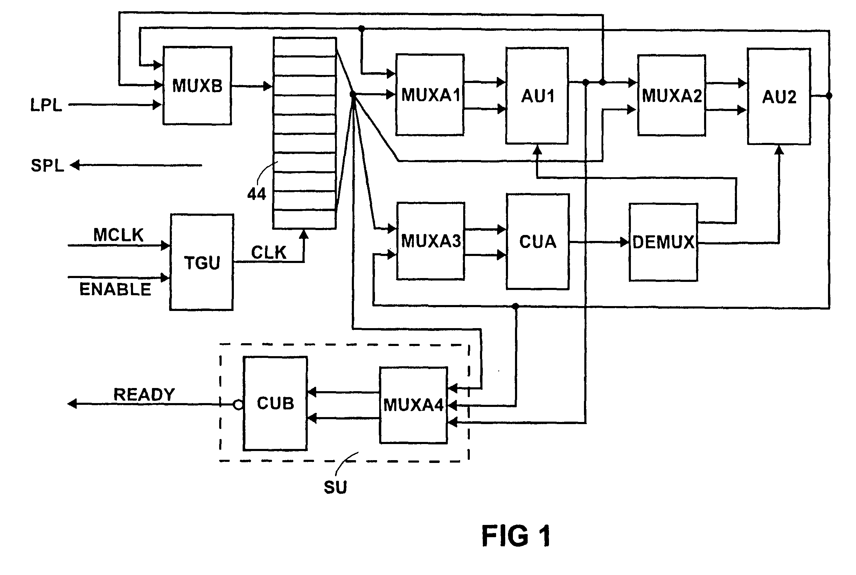

Der prinzipielle Aufbau eines UCB ist in Figur 1 gezeigt.

Der gezeigte UCB weist eine oder mehrere arithmetische Einheiten AU1, AU2, eine oder mehrere Vergleichs-Einheiten eines ersten Typs CUA, einen oder mehrere Multiplexer eines ersten Typs MUXA1, MUXA2, MUXA3, einen oder mehrere Multiplexer eines zweiten Typs MUXB, einen oder mehrere Demultiplexer DEMUX, eine oder mehrere Taktgenerierungs-Einheiten TGU und eine oder mehrere Signalisierungs-Einheiten SU auf, wobei die Signalisierungs-Einheit SU im betrachteten Beispiel einen Multiplexer des ersten Typs MUXA4 und eine Vergleichs-Einheit eines zweiten Typs CUB umfaßt.

Die arithmetischen Einheiten AU1, AU2 weisen im betrachteten Beispiel zwei Eingangsanschlüsse, einen Ausgangsanschluß und einen Steueranschluß auf. Den arithmetischen Einheiten AU1, AU2 obliegt es, die über deren Eingangsanschlüsse eingegebenen Eingangssignale arithmetisch und/oder logisch zu verarbeiten. Die Operationen, die durch die arithmetischen Einheiten AU1, AU2 ausführbar sind, können fest vorgegeben oder individuell einstellbar (konfigurierbar) sein; sie umfassen insbesondere arithmetische Operationen wie Addition, Subtraktion, Multiplikation, Division etc., logische Verknüpfungen wie UND-Verknüpfungen, ODER-Verknüpfungen, Invertierung, Komplementbildung etc., arithmetische und logische Shift-Operationen, und Datentransfers (Durchschaltung eines der eingegebenen Signale zum Ausgangsanschluß). Die arithmetischen Einheiten AU1, AU2 sind nicht mit den Arithmetisch/-Logischen Einheiten (ALUs) herkömmlicher programmgesteuerter Einheiten wie Mikroprozessoren, Mikrocontrollern etc. gleichzusetzen; die von ihnen ausführbaren Operationen sind begrenzt, so daß der Aufbau der arithmetischen Einheiten AU1, AU2 vergleichsweise einfach bleiben kann. Über die Steueranschlüsse der arithmetischen Einheiten AU1, AU2 ist festlegbar, ob die betreffende arithmetische Einheit die Operation, zu deren Ausführung sie vorgesehen ist, ausführt oder nicht. Dies ermöglicht die praktische Umsetzung von Befehlen, deren Ausführung vom Vorliegen einer bestimmten Bedingung abhängt. Die Bedingung kann beispielsweise der Zustand eines bestimmten Flags sein: ist das Flag gesetzt, wird die der betreffenden arithmetischen Einheit obliegende Aufgabe (beispielsweise eine Addition) ausgeführt, andernfalls nicht (oder umgekehrt). Derartige, nachfolgend als "konditionierte Befehle" bezeichnete Befehle ermöglichen es, die schwer handhabbaren bedingten Sprungbefehle zu eliminieren; sie werden später noch genauer beschrieben.

Die Vergleichs-Einheit des ersten Typs CUA weist im betrachteten Beispiel zwei Eingangsanschlüsse und einen Ausgangsanschluß auf. Der Vergleichs-Einheit CUA obliegt es, die an deren Eingangsanschlüssen anliegenden Signale oder Daten Vergleichsoperationen zu unterziehen. Die Operationen, die durch die Vergleichs-Einheit CUA ausführbar sind, können fest vorgegeben oder individuell einstellbar (konfigurierbar) sein; sie umfassen beispielsweise Größer-, Größer/Gleich-, Kleiner-, Kleiner/Gleich-, Gleich-, und Ungleich-Vergleiche und Überprüfungen auf wahr (TRUE) und unwahr (FALSE). Der Ausgangsanschluß der Vergleichs-Einheit CUA ist über den nachfolgend noch genauer beschriebenen Demultiplexer DEMUX mit den Steueranschlüssen der arithmetischen Einheiten AU1, AU2 verbunden. Vom Ergebnis der in der Vergleichs-Einheit CUA ausgeführten Operation hängt es also ab, ob die arithmetischen Einheiten AU1, AU2 die Operation, zu deren Ausführung sie vorgesehen sind, ausführen oder nicht.

Die Multiplexer des ersten Typs MUXA1, MUXA2, MUXA3 und MUXA4, der Multiplexer des zweiten Typs MUXB, und der Demultiplexer DEMUX dienen zur Auswahl der Daten- und/oder Signalquellen und der Daten- und/oder Signalziele. Genauer gesagt dienen
- der Multiplexer MUXA1 zur Auswahl der Quellen der den Eingangsanschlüssen der arithmetischen Einheit AU1 zugeführten Daten und/oder Signale (mögliche Daten- und/oder Signalquellen sind im betrachteten Beispiel das register file 44 und andere arithmetische Einheiten),
- der Multiplexer MUXA2 zur Auswahl der Quellen der den Eingangsanschlüssen der arithmetischen Einheit AU2 zugeführten Daten und/oder Signale (mögliche Daten- und/oder Signalquellen sind im betrachteten Beispiel das register file 44 und andere arithmetische Einheiten),
- der Multiplexer MUXA3 zur Auswahl der Quellen der den Eingangsanschlüssen der Vergleichs-Einheit CUA zugeführten Daten und/oder Signale (mögliche Daten- und/oder Signalquellen sind im betrachteten Beispiel das register file 44 und die arithmetischen Einheiten),
- der Multiplexer MUXA4 zur Auswahl der Quellen der den Eingangsanschlüssen der Vergleichs-Einheit CUB zugeführten Daten und/oder Signale (mögliche Daten- und/oder Signalquellen sind im betrachteten Beispiel das register file 44 und die arithmetischen Einheiten),
- der Multiplexer MUXB zur Auswahl der Quellen der dem register file zugeführten Daten und/oder Signale (mögliche Daten- und/oder Signalquellen sind im betrachteten Beispiel die arithmetischen Einheiten, das register file selbst, und (im betrachteten Beispiel über eine sogenannte Load/Store-Pipeline LPL, SPL) die externe Hardware),
- der Demultiplexer DEMUX zur Auswahl des oder der Ziele für die von der Vergleichs-Einheit CUA ausgegebenen Daten und/oder Signale (mögliche Daten- und/oder Signalziele sind im betrachteten Beispiel die arithmetischen Einheiten).

Die Multiplexer des ersten Typs weisen mehrere Eingangsanschlüsse und zwei Ausgangsanschlüsse auf, die Multiplexer des zweiten Typs mehrere Eingangsanschlüsse und einen Ausgangsanschluß, und der Demultiplexer einen Eingangsanschluß und mehrere Ausgangsanschlüsse.

Die Multiplexer und der Demultiplexer weisen in der Figur 1 nicht gezeigte Steueranschlüsse auf, über welche einstellbar ist, welche Eingangsdaten und/oder -signale auf welche Ausgangsanschlüsse durchgeschaltet werden. Die Anzahl der Steueranschlüsse hängt von der erforderlichen Anzahl der verschiedenen Zuordnungs-Kombinationen ab; bei 32 Eingangsanschlüssen und zwei Ausgangsanschlüssen sind beispielsweise 10 Steueranschlüsse erforderlich, um an beliebigen Eingangsanschlüssen anliegende Signale und/oder Daten auf beliebige Ausgangsanschlüsse durchschalten zu können. Im Fall des Einsatzes des UCB als functional unit 42 im >S<puter gemäß Figur 3 sind die Steuersignalanschlüsse vorzugsweise mit dem programmable structure buffer 41 verbunden, so daß die in diesen eingeschriebenen Konfigurations-Daten im wesentlichen unmittelbar zur Multiplexer-Ansteuerung verwendbar sind. Die im programmable structure buffer 41 gespeicherten Konfigurations-Daten umfassen vorzugsweise auch die Konfigurations-Daten zur Festlegung der jeweiligen Funktion der arithmetischen Einheiten AU1, AU2, der Vergleichs-Einheiten CUA, CUB, der Taktgenerierungs-Einheit TGU und/oder der Signalisierungs-Einheit SU.

Durch die arithmetischen Einheiten AU1, AU2, die Vergleichs-Einheit des ersten Typs CUA, die Multiplexer des ersten Typs MUXA1, MUXA2, MUXA3, den Multiplexer des zweiten Typs MUXB, und den Demultiplexer DEMUX wird der UCB in die Lage versetzt, in einer Speichereinrichtung (im register file 44) gespeicherte Daten auszulesen, die ausgelesenen Daten arithmetisch und/oder logisch zu verarbeiten und das Ergebnis der Verarbeitung repräsentierende Daten in die Speichereinrichtung (das register file 44) einzuschreiben.

Wie eingangs bereits erwähnt wurde, ist der UCB darüber hinaus in die Lage versetzbar, selbständig mit externer Hardware zu interagieren. Die Interaktion besteht im betrachteten Beispiel darin, daß
- der UCB die Speichereinrichtung im Ansprechen auf bestimmte Ereignisse zur Übernahme von von der externen Hardware bereitgestellten Daten veranlassen kann, und
- der UCB Daten und/oder Signale an die externe Hardware ausgeben kann.

Die externe Hardware besteht im betrachteten Beispiel aus anderen UCBs und/oder einer über- oder nebengeordneten Steuereinrichtung und/oder sonstige Komponenten des den UCB enthaltenden Systems (beispielsweise Sensoren, A/D-Wandlern, D/A-Wandlern, Timern, Interrupt Controllern, zu steuernden Einrichtungen etc.).

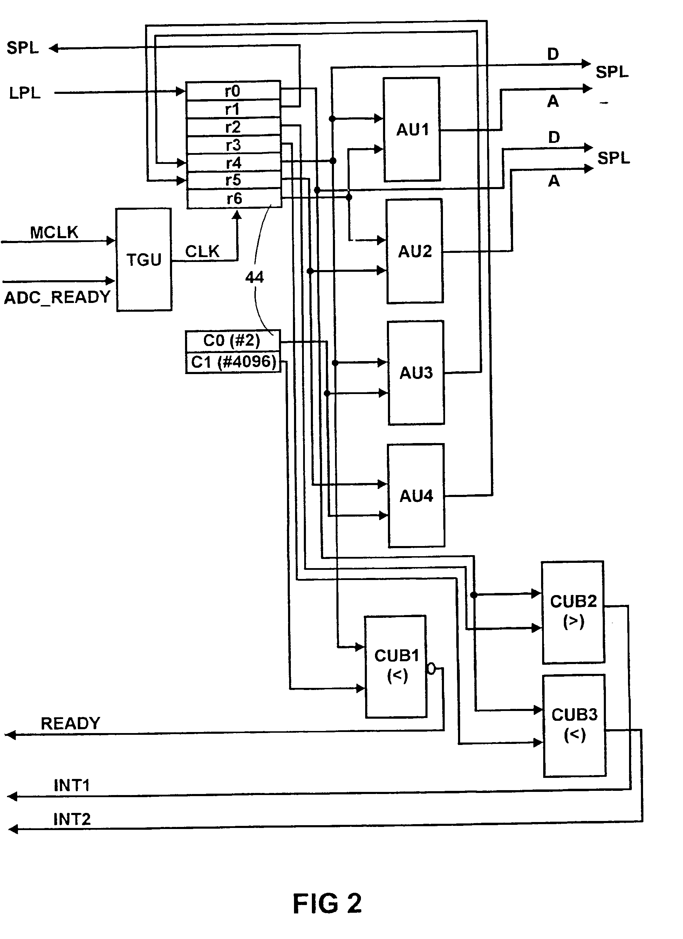

Die Interaktion des UCB mit externer Hardware wird im wesentlichen (aber - wie aus Figur 2 ersichtlich ist - nicht ausschließlich) durch die mindestens eine Taktgenerierungs-Einheit TGU und die mindestens eine Signalisierungs-Einheit SU bewirkt.

Die mindestens eine Taktgenerierungs-Einheit TGU und die mindestens eine Signalisierungs-Einheit SU repräsentieren eine Schnittstelle zu der externen Hardware. Wie später noch genauer verstanden werden wird, kann der UCB damit eigenständig (ohne Zwischenschaltung einer übergeordneten Steuereinrichtung) mit der externen Hardware interagieren.

Der Taktgenerierungs-Einheit TGU obliegt es, basierend auf von innerhalb und/oder außerhalb des UCB stammenden Signalen und/oder Daten ein periodisches oder nicht-periodisches Taktsignal zu generieren. Die Eingangssignale sind im betrachteten Beispiel ein periodischer Master-Takt MCLK des den UCB enthaltenden Systems und ein Enable-Signal ENABLE einer externen Hardware-Komponente, mit welcher der UCB kooperieren soll. Grundsätzlich können jedoch beliebig viele und von beliebigen Quellen stammende Eingangssignale zur Taktsignalerzeugung herangezogen werden. Zur Erhöhung der Flexibilität kann vorgesehen werden, der Taktgenerierungs-Einheit TGU eingangsseitig einen Multiplexer vorzuschalten; dann können die der Taktgenerierungs-Einheit zugeführten Eingangssignale applikationsspezifisch aus einer großen Anzahl potentieller Eingangssignale ausgewählt werden. Das von der Taktgenerierungs-Einheit TGU generierte Taktsignal CLK wird im betrachteten Beispiel als Taktsignal für eine im betrachteten Beispiel durch das register file 44 gebildete Speichereinrichtung verwendet; das register file ist in diesem Fall dazu ausgelegt, das Einschreiben von Daten und/oder das Ausgeben von Daten im Takt des Taktsignals durchzuführen. Dadurch können
- von externer Hardware (beispielsweise von einem A/D-Wandler) direkt oder indirekt (beispielsweise über die bereits erwähnte Load/Store-Pipeline LPL, SPL) bereitgestellte Daten im Takt des von der Taktgenerierungs-Einheit erzeugten Taktsignals, also zu genau definierten Zeitpunkten (beispielsweise auf ein das Wandlungsende des A/D-Wandlers signalisierendes Signal ADC_READY hin) in das register file 44 übernommen werden und/oder
- im register file 44 gespeicherte Daten direkt oder indirekt (beispielsweise über die Load/Store-Pipeline LPL, SPL) an externe Hardware (beispielsweise an einen externen Speicher wie den data cache 5 beim >S<puter gemäß Figur 3) ausgegeben werden.

Die Signalisierungs-Einheit SU besteht im betrachteten Beispiel aus einem Multiplexer des ersten Typs MUXA4 und einer Vergleichs-Einheit eines zweiten Typs CUB; ihr obliegt es, basierend auf von innerhalb und/oder außerhalb des UCB stammenden Signalen ein oder mehrere bestimmte Zustände oder Ereignisse signalisierende, nachfolgend als Meldesignale bezeichnete Signale zu erzeugen. Bei dem in Figur 1 gezeigten UCB wird nur 1 Meldesignal erzeugt. Dieses eine Meldesignal ist das Ausgangssignal der Vergleichs-Einheit CUB, welche die zwei Ausgangssignale des der Vergleichs-Einheit CUB eingangsseitig vorgeschalteten Multiplexers MUXA4 vergleicht. Durch das Vorsehen des Multiplexers MUXA4 können die der Meldesignalerzeugung zugrundezulegenden Signale applikationsspezifisch aus einer großen Anzahl von hierfür verwendbaren Signalen ausgewählt werden. Die der Meldesignalerzeugung zugrundelegbaren Signale umfassen im betrachteten Beispiel unter anderem ein Ausgangssignal der arithmetischen Einheit AU2 und ein Ausgangssignal des register file 44; zusätzlich oder alternativ können der Meldesignalerzeugung beliebige andere Signale zugrundegelegt werden.

Das oder die Meldesignale, die durch die Signalisierungs-Einheit erzeugt werden, werden verwendet, um externer Hardware bestimmte Zustände oder Ereignisse zu signalisieren. Damit kann beispielsweise durch ein READY-Signal das Ende der Ausführung der durch den UCB auszuführenden Operationen signalisiert werden. Wenn die Operationen, die der UCB auszuführen hat, die Operationen sind, die während eines Durchlaufs einer wiederholt zu durchlaufenden Schleife auszuführen sind, so kann durch das Meldesignal auch das Ende der durchzuführenden Schleifendurchläufe signalisiert werden. Die Vergleichs-Einheit CUB kann nämlich unter anderem auch als Schleifenzähler verwendet werden, durch den signalisiert wird, wenn die vom UCB auszuführenden Operationen eine der durchzuführenden Schleifendurchläufe entsprechende Anzahl von Malen ausgeführt wurden. Die Meldesignale können unter anderem auch als Interrupt Requests verwendet werden.

Die Vergleichs-Einheit CUB entspricht übrigens weitestgehend der Vergleichs-Einheit des ersten Typs CUA; unterschiedlich ist im wesentlichen "nur", daß die Standard-Einstellung des Pegels des Ausgangssignals FALSE sein kann, und daß die Standard-Einstellung des Pegels des Ausgangssignals vorzugsweise applikationsspezifisch einstellbar ist.

Der in Figur 1 gezeigte und unter Bezugnahme darauf beschriebene UCB ist nur zur Erläuterung des grundlegenden Aufbaus gedacht. In der Praxis werden die arithmetische Einheiten, die Vergleichs-Einheiten, die Multiplexer, die Demultiplexer, und gegebenenfalls auch die Taktgenerierungs-Einheit und die Signalisierungs-Einheit in einer deutlich größeren Anzahl vorgesehen werden als es beim Beispiel gemäß Figur 1 der Fall ist. Der UCB ist vorzugsweise so dimensioniert, daß normalerweise sämtliche Operationen, die von einem später noch näher beschriebenen, sogenannten Hyperblock zu bewirken sind, auf ein Mal in ihn einprogrammierbar sind.

Die im UCB vorgesehenen Daten- und/oder Signalpfade können durch einzelne Leitungen oder durch Busse gebildet werden, wobei es sich als vorteilhaft erweisen kann, wenn in den einzelnen Komponenten des UCB oder im Bus-System konfigurierbar ist, wie viele und/oder welche Busleitungen zu berücksichtigen sind.

Ein UCB der vorstehend beschriebenen Art erweist sich gegenüber herkömmlichen konfigurierbaren Hardware-Blöcken (feldprogrammierbaren Logiken) in mehrfacher Hinsicht als vorteilhaft.

Ein erster Vorteil besteht darin, daß die datenverknüpfenden Einheiten des UCB zur Ausführung komplexerer Operationen in der Lage sind. D.h., es findet eine zumindest partielle Abkehr von auf DNFs (disjunktiven Normalformen) basierenden oder tabellenorientierten logischen Verknüpfungen statt; pro arithmetischer Einheit (AU) sind eine oder sogar mehrere arithmetisch-logische Verknüpfungen realisierbar.

Die in den UCBs (deren arithmetischen Einheiten) ausführbaren Operationen sind zudem umfangreicher (gröber geblockt) als es etwa bei FPGAs (field programmable gate arrays) der Fall ist. Die durch die einzelnen arithmetischen Einheiten ausführbaren Operationen lassen sich dadurch schneller, einfacher und sicherer in Übereinstimmung mit den Aktionen bringen, die durch Instruktionen oder Algorithmen für programmgesteuerte Einheiten zu bewirken sind, wodurch sich in programmgesteuerten Einheiten auszuführende Programme oder Programmteile mit minimalem Aufwand in Konfigurations-Daten umsetzen lassen, durch welche der UCB derart konfiguriert wird, daß dessen Betrieb die Vornahme der durch die Abarbeitung des betreffenden Programms oder Programmteils zu bewirkenden Aktionen zur Folge hat.

Wie eingangs bereits erwähnt wurde, zeichnen sich die UCBs ferner dadurch aus, daß sie selbständig mit externer Hardware kooperieren können, wobei es sich insbesondere bei Verbindungen zu rechnenden Einheiten als vorteilhaft erweisen kann, wenn die Kopplung zur externen Hardware zumindest teilweise über die sogenannten Load/Store-Pipelines erfolgt.

Vorteilhaft ist ferner, daß das den UCB synchronisierende Element, nämlich die Speichereinrichtung (im betrachteten Beispiel das register file 44) Verbindungen zur externen Hardware aufweist.

Hardware-Blöcke nach Art der Figur 1 können und werden vorzugsweise basierend auf Befehlen oder Befehlsfolgen konfiguriert. Setzt man Befehle oder Befehlsfolgen in entsprechende Hardware-Block-Strukturen um, so ist der so konfigurierte Hardware-Block als Ablaufeinheit für sequentielle Befehlsfolgen nutzbar. Diese Form der Hardware-Block-Konfigurierung wird nachfolgend auch als struktur-prozedurale Programmierung bezeichnet.

Ausgangspunkt für die struktur-prozedurale Programmierung kann ein in einer Hochsprache wie beispielsweise C, C++ etc. geschriebenes Programm sein. Dieses Programm wird durch einen Compiler übersetzt, und der dabei erhaltene Code wird (vorzugsweise hyperblock-weise) in Strukturinformationen umgesetzt, basierend auf welcher der zu konfigurierende Hardware-Block konfigurierbar ist. Was unter einem Hyperblock zu verstehen ist, wird später noch genauer beschrieben werden.

Ausgangspunkt für die struktur-prozedurale Programmierung kann selbstverständlich auch ein in Assembler geschriebenes oder sonstiges Programm sein. Die Art und Weise der Programmierung (funktional, imperativ, objekt-orientiert, ...) ist ebenfalls keinen Einschränkungen unterworfen.

Es erweist sich als vorteilhaft, wenn der in die Strukturinformation umzusetzende Code, also die durch den Compiler oder auf andere Art und Weise erzeugten Maschinenbefehle im wesentlichen ausschließlich fünf Maschinenbefehl-Typen, nämlich unkonditionierte Befehle, konditionierte Befehle, Predicate-Befehle, Loopxx-Befehle, und Intxx-Befehle umfassen. Dann lassen sich in der Regel besonders lange (besonders viele Befehle enthaltende) Befehls-Blöcke mit nur einem Eintrittspunkt und nur einem Austrittspunkt bilden. Die Generierbarkeit von möglichst langen Befehls-Blöcken mit nur einem Eintrittspunkt und nur einem Austrittspunkt ist sehr bedeutsam, weil sich Befehle, die ein- und dem selben Befehls-Block angehören, und zwar nur solche Befehle, als eine Einheit (als eine sich aus mehreren Befehlen zusammensetzende Makroinstruktion) behandeln lassen, die in eine gemeinsame Hardware-Block-Struktur umgesetzt und auf ein Mal ausgeführt werden kann. Legt man der Konfigurierung eines Hardware-Blocks jeweils genau eine solche Einheit zugrunde (und ist der Hardware-Block groß genug, um so konfiguriert werden zu können), so läßt sich die Anzahl der zur Abarbeitung eines Programms erforderlichen Umstrukturierungen bzw. Umkonfigurierungen des Hardware-Blocks auf ein Minimum reduzieren. Die Befehls-Blöcke, deren Generierung derzeit favorisiert wird, und deren Bildung durch die vorstehend genannten Befehlsgruppen auch möglich ist, sind die vorstehend bereits erwähnten Hyperblöcke.

Hyperblöcke zeichnen sich insbesondere dadurch aus, daß bedingte Sprungbefehle unter Anwendung der nachfolgend noch näher beschriebenen sogenannten if-Konversion eliminiert werden.

Bezüglich weiterer Einzelheiten zu den Hyperblöcken, anderen Befehls-Blöcken und damit in Zusammenhang stehenden Themen wird auf
- Wen-Mei W. Hwu et al.: "Compiler Technology for Future Microprocessors", Invited Paper in Proceedings of the IEEE, Vol. 83 (12), Dezember 1995, Special Issue on Microprocessors, Seiten 1625 bis 1640,
- Henk Neefs, Jan van Campenhout: "A Microarchitecture for a Fixed Length Block Structured Instruction Set Architecture", Proceedings of the Eighth IASTED International Conference on Parallel and Distributed Computing and Systems, Seiten 38 bis 42, IASTED/ACTA Press, 1996, und
- Richard H. Littin, J.A. David McWha, Murray W. Pearson, John G. Cleary: "Block Based Execution and Task Level Parallelism", in: John Morris (Ed.), "Computer Architecture 98", Proceedings of the 3rd Australasian Computer Architecture Conference, ACAC'98, Perth, 2-3 February 1998, Australian Computer Science Communications, Vol. 20, No. 4, Seiten 57 bis 66, Springer, Singapore, verwiesen.

Wie vorstehend bereits angedeutet wurde, ist ein Hardware-Block vorzugsweise so dimensioniert, daß dessen Konfigurierung hyperblock-weise erfolgen kann, also nach Möglichkeit immer ganze Hyperblöcke in entsprechende Hardware-Block-Strukturen umgesetzt werden können.

Die vorstehend erwähnten unkonditionierten Befehle sind Befehle zur bedingungslosen Bearbeitung von Daten einschließlich der Kopie von Daten von einem Speicherbereich in einen anderen (von einem Register in ein anderes). Diese Befehle werden im folgenden als normale Befehle bezeichnet. Sie umfassen arithmetische und logische Verknüpfungen zwischen Daten zu neuen Werten und die sogenannten Move-Befehle zur Kopie von Registerinhalten. Das allgemeine Format dieser Befehle lautet: <Mnemonic> <Ziel-Register>, <Quellen-Register 1>, <Quellen-Register 2>. Zur Durchführung eines solchen Befehls wird eine arithmetische Einheit des Hardware-Blocks benötigt.

Die konditionierten Befehle sind Befehle zur Bearbeitung von Daten bei Vorliegen einer bestimmten Bedingung (Kondition). Die durch diese Befehle auszuführenden Aktionen bzw. Operationen entsprechen den durch die normalen Befehle ausführbaren Aktionen bzw. Operationen, wobei die Ausführung der betreffenden Aktionen jedoch von einer vorbestimmten Bedingung abhängt. Ist die Bedingung erfüllt, wird die durch den Befehl spezifizierte Aktion ausgeführt, anderenfalls wird nichts ausgeführt (der betreffende Befehl wirkt dann wie ein NOP-Befehl). Diese Befehle werden im folgenden als bedingte Befehle bezeichnet. Das allgemeine Format dieser Befehle lautet: <Mnemonic>p <Ziel-Register>, <Quellen-Register 1>, <Quellen-Register 2> <p-Flag>, wobei durch das "p" am Ende des Mnemonic die Abhängigkeit der Befehlsausführung von einer Bedingung signalisiert wird, und wobei die Bedingung durch einen bestimmten Zustand eines bestimmten Flags (des "p-Flag") definiert wird. Zur Durchführung der durch einen solchen Befehl spezifizierten Aktion wird eine arithmetische Einheit des Hardware-Blocks benötigt; zur Überprüfung der Bedingung wird eine Vergleichs-Einheit benötigt, deren Ausgang mit dem Steuereingang der arithmetischen Einheit verbunden ist.

Die Predicate-Befehle sind Befehle zur Festlegung des Zustandes des in den bedingten Befehlen verwendeten Bedingungs-Flags (des p-Flags). Die Festlegung erfolgt dabei während des Programmablaufs basierend auf einem Vergleich von zwei Daten. Diese Befehle werden im folgenden als pxx-Befehle bezeichnet. Das allgemeine Format dieser Befehle lautet: pxx <Quellen-Register 1>, <Quellen-Register 2>, <p-Flag>, wobei xx die durchzuführende Vergleichsoperation spezifiziert und durch gt (größer als), ge (größer oder gleich), eq (gleich), ne (ungleich), le (kleiner oder gleich) oder lt (kleiner als) zu ersetzen ist. Die pxx-Befehle sind mit den üblichen Branch-Befehlen vergleichbar und dienen zum Ersatz derselben durch die Anwendung der sogenannten if-Konversion (siehe hierzu den vorstehend bereits erwähnten Aufsatz von Wen-Mei W. Hwu et al.).

Die Loopxx-Befehle sind zur Schleifenwiederholung dienende Befehle am Ende eines Hyperblocks. Sie veranlassen einen Rücksprung an den Anfang des betreffenden Hyperblocks, falls eine im Befehl spezifizierte Bedingung erfüllt ist; sie veranlassen eine durch die Signalisierungs-Einheit SU vorzunehmende Generierung eines READY-Signals, wenn die Bedingung nicht mehr erfüllt ist. Die Bedingung ist durch ein bestimmtes Ergebnis einer Vergleichsoperation definiert. Das allgemeine Format dieser Befehle lautet: loopxx <Quellen-Register 1>, <Quellen-Register 2>, wobei xx die durchzuführende Vergleichsoperation spezifiziert.

Die Intxx-Befehle sind Befehle zur Erzeugung von an die externe Hardware auszugebenden Signalen. Sie stellen eine Verallgemeinerung der Loopxx-Befehle dar: damit können aus beliebigen Anlässen beliebigen Bedeutungsinhalt aufweisende Signale an beliebige externe Komponenten des den UCB enthaltenden Systems ausgegeben werden. Das allgemeine Format dieser Befehle lautet: intxx <Quellen-Register 1>, <Quellen-Register 2>, <int_Signal>, wobei xx die durchzuführende Vergleichsoperation spezifiziert, und wobei "int_Signal" das (durch die Signalisierungs-Einheit SU) zu erzeugende und auszugebende Meldesignal spezifiziert.

Daß der UCB die Operationen, die durch die vorstehend aufgezählten und erläuterten Befehlstypen spezifiziert sind, ausführen kann, macht diesen zu einer äußerst vielfältig einsetzbaren Komponente. Damit sind viele Programme oder Programmteile vollständig durch den UCB ausführbar. Der UCB kann als mehr oder weniger vollwertiger Ersatz von programmgesteuerten Einheiten verwendet werden, oder - wenn er Bestandteil einer programmgesteuerten Einheit ist oder mit einer solchen kooperiert - deren Leistungsfähigkeit erheblich steigern.

Nachfolgend wird der Vollständigkeit kurz erläutert, wie die Umsetzung der Befehle in eine entsprechende UCB-Struktur (die Selbstkonfigurierung des UCB aus einem sequentiellen Instruktionsstrom) erfolgen kann. Da hier nur das grundlegende Prinzip der Umsetzung erläutert werden soll, beschränken sich die folgenden Ausführungen auf die Umsetzung der normalen, bedingten, und pxx-Befehle. Die anderen Befehle, genauer gesagt die Loopxx- und Intxx-Befehle erfordern unter Umständen eine Sonderbehandlung, die jedoch bei Kenntnis des nachfolgend beschriebenen Vorgehensweise keine Schwierigkeit bereitet.

Der UCB, genauer gesagt dessen Teileinheiten (arithmetische Einheiten, Vergleichs-Einheiten, Multiplexer, Demultiplexer, ...) und die Verbindungen zwischen den Teileinheiten werden im betrachteten Beispiel durch die gewünschte Konfiguration repräsentierende Konfigurations-Daten (Konfigurations-Bits) konfiguriert. Dementsprechend ist es die Aufgabe des nachfolgend beschriebenen Umsetzungsverfahrens, (vorzugsweise definiert vorbesetzte) Konfigurations-Bits bzw. einen diese enthaltenden Bitstrom basierend auf den der UCB-Konfiguration zugrundezulegenden Befehlen oder Befehlsfolgen zu generieren bzw. modifizieren.

Insbesondere wenn die Teileinheiten des UCB konfigurierbar sind, werden diesen (physikalischen) Teileinheiten logische bzw. virtuelle Einheiten zugeordnet, wobei die virtuellen Einheiten die verschiedenen Funktionen der physikalischen Teileinheiten angeben. Der physikalischen Teileinheit "erste arithmetische Einheit AU1" können - sofern diese konfigurierbar ist - beispielsweise die virtuellen Einheiten Addierer, Subtrahierer etc. zugeordnet sein. Eine virtuelle Einheit ist genau einer physikalischen Teileinheit zugeordnet ist, aber einer physikalischen Teileinheit können mehrere virtuelle Einheiten zugeordnet sein. Sämtliche virtuellen Einheiten werden vorzugsweise in einer Tabelle oder Liste verwaltet. Die jeweiligen Einträge enthalten neben Informationen zu den virtuellen Einheiten selbst auch Information darüber, welcher physikalischen Teileinheit die jeweiligen virtuellen Einheiten zugeordnet sind, über welche Konfigurations-Bits und wie diese physikalische Teileinheit gegebenenfalls konfiguriert werden muß, um ihr die durch die virtuelle Einheit repräsentierte Funktion zu verleihen.

Die Umsetzung einer Instruktion in eine UCB-Strukturierungsinformationen erfolgt im wesentlichen in drei Schritten.

Im ersten Schritt wird zunächst ermittelt, welcher Typ von virtueller Einheit (Addierer, Subtrahierer, Multiplizierer ...) zur Ausführung der umzusetzenden Instruktion benötigt wird, und ob eine solche virtuelle Einheit noch verfügbar ist. Ist noch eine virtuelle Einheit des benötigten Typs frei, so wird diese oder eine von diesen zur Ausführung der betreffenden Instruktion ausgewählt. Sodann erfolgen die Konfiguration oder deren Vorbereitung und eine Reservierung der der ausgewählten virtuellen Einheit zugeordneten physikalischen Teileinheit. Zur Konfiguration werden einfach die der betreffenden physikalischen Teileinheit zugeordneten Konfigurations-Bits gesetzt oder zurückgesetzt; dies bereitet keine Schwierigkeiten, denn die Informationen, welcher physikalischen Teileinheit die ausgewählte virtuelle Einheit zugeordnet ist, über welche Konfigurations-Bits und wie diese physikalische Teileinheit gegebenenfalls zu konfigurieren ist, werden ja zusammen mit der virtuellen Einheit verwaltet. Die Reservierung der der ausgewählten virtuellen Einheit zugeordneten physikalischen Teileinheit ist notwendig, um zu verhindern, daß die betreffende physikalische Teileinheit mehrfach verwendet werden kann. Im betrachteten Beispiel wird dies dadurch bewerkstelligt, daß nach jeder Vergabe einer physikalischen Teileinheit für einen bestimmten Zweck sämtliche virtuellen Einheiten, die der betreffenden physikalischen Teileinheiten zugeordnet werden, gesperrt werden.

Bei pxx-Befehlen kann es je nach dem Aufbau des UCB erforderlich sein, abhängig vom p-Flag eine ganz Vergleichs-Einheit auszuwählen.

Bei bedingten Befehlen wirkt sich das p-Flag nur dann auf die Auswahl der virtuellen/physikalischen Einheit(en) aus, wenn bestimmte Instruktionen nur mit bestimmten Flags möglich sind, also keine vollständige Orthogonalität in dem Teilbefehlssatz für bedingte Befehle vorhanden ist.

Im zweiten Schritt der UCB-Konfigurierung werden die den ausgewählten physikalischen Teileinheiten vor- und/oder nachgeschalteten Multiplexer konfiguriert, um die Daten und/oder Signalquellen und die Daten- und/oder Signalziele entsprechend den Festlegungen in den umzusetzenden Instruktionen einzustellen. Die Multiplexer und das Format der umzusetzenden Instruktionen sind im Idealfall so aneinander angepaßt, daß die die Daten- und/oder Signalquellen und die die Daten- und/oder Signalziele festlegenden Teile der Instruktionen unverändert als die die Multiplexer konfigurierenden Konfigurations-Bits übernommen werden können. Ist dies - aus welchem Grund auch immer - nicht möglich oder gewünscht, so können die die Multiplexer konfigurierenden Konfigurations-Bits beispielsweise einer Tabelle entnommen werden, in welcher die Zuordnung zwischen den die Daten- und/oder Signalquellen und die Daten- und/oder Signalziele festlegenden Teilen der Instruktionen und den die Multiplexer konfigurierenden Konfigurations-Bits gespeichert ist. Die Konfigurierung, die erforderlich ist, um eine Verbindung zu einer bestimmten Daten- und/oder Signalquelle und/oder zu einem bestimmten Daten- und/oder Signalziel herzustellen, ist vorzugsweise für alle Multiplexer gleich.

Eine gesonderte Behandlung ist notwendig, wenn die der auszuführenden Operation zugrundezulegenden Daten zumindest teilweise aus einer im Instruktions-Code enthaltenen Konstanten bestehen. Dann muß
- ein freies (Konstanten-)Register gesucht werden,
- dieses Register als Daten- und/oder Signalquelle verwendet werden, und
- die im Instruktions-Code enthaltene Konstante vor der Inbetriebnahme des UCB in das ausgewählte Register eingeschrieben werden.

Es kann vorgesehen werden, vorab zu überprüfen, ob die betreffende Konstante schon in einem (Konstanten-)Register gespeichert ist. Ergibt sich dabei, daß bereits ein die Konstante enthaltendes (Konstanten-)Register existiert, so kann dieses schon existierende (Konstanten-)Register als Daten- und/oder Signalquelle verwendet werden.

Zu beachten ist ferner, daß die umzusetzenden Instruktionen unterschiedlich viele Daten- und/oder Signalquellen und Daten- und/oder Signalziele aufweisen.

Als Daten- und/oder Signalziel verwendete Register werden übrigens als belegt markiert, da innerhalb eines Hyperblocks keine Zweitbelegung zulässig ist und durch ein sogenanntes (Runtime) Register Renaming, einer aus superskalaren Architekturen bekannten Technologie, verhindert werden muß.

Nach diesem (für alle Befehle gemeinsamen) zweiten Schritt werden für einzelne Befehlstypen spezielle Teilschritte eingefügt, die sich aus den jeweiligen Besonderheiten ergeben.

Unter anderem muß bei bedingten Befehlen die das Vorliegen der Bedingung überprüfende Vergleichs-Einheit ermittelt werden und deren Ausgangssignal über den zugehörigen Demultiplexer auf die die Operation ausführende arithmetische Einheit geschaltet werden. Ferner ist zu berücksichtigen, welcher Art die Bedingung ist.

Bei bedingten Move-Befehlen ist zusätzlich dafür Sorge zu tragen, daß der Inhalt des Zielregisters bei Nicht-Ausführung des Befehls nicht verändert wird.

Nach dem zweiten Schritt der UCB-Konfigurierung könnte diese beendet und der UCB gestartet werden. Dies geschieht vorzugsweise jedoch erst nach der Ausführung des nachfolgend beschriebenen dritten Schrittes.

In diesem dritten Schritt der UCB-Konfigurierung wird ein sogenanntes data forwarding realisiert. Dabei werden als Daten- und/oder Signalquellen nicht stur die in den Instruktionen angegebenen Daten- und/oder Signalquellen verwendet, sondern nach Möglichkeit die physikalische Teileinheit, die die betreffende Daten- und/oder Signalquelle innerhalb des jeweiligen Hyperblocks zuvor zu beschreiben hatte. Dies erweist sich in zweifacher Hinsicht als vorteilhaft: einerseits, weil eventuell weniger Register benötigt werden (wenn die in der Instruktion angegebene Daten- und/oder Signalquelle nicht als solche verwendet wird, muß sie auch nicht beschrieben werden und kann gegebenenfalls ganz weggelassen werden), und andererseits, weil die benötigten Daten bei Abholung von der diese erzeugenden Teileinheit (beispielsweise einer arithmetischen Einheit) früher verfügbar sind als wenn sie zuerst in ein Register geschrieben und von dort abgeholt werden müssen. Das data forwarding kann bei allen Befehlen zur Anwendung kommen und erweist sich im Durchschnitt als enormer Vorteil.

Abschließend soll ein praktisches Beispiel zum Einsatz des UCB beschrieben werden.

Das Beispiel betrifft eine Analog/Digital-Wandlung von Daten. Genauer gesagt soll
- ein A/D-Wandler mit einer Wandlungsbreite von 8 Bit von einem Timer gestartet werden,
- das Ergebnis der A/D-Wandlung zusammen mit einer 12-Bit-Zählmarke gespeichert werden,
- das Ergebnis der A/D-Wandlung auf das Über- und Unterschreiten bestimmter Grenzwerte überwacht werden, wobei bei einem Über- oder Unterschreiten der Grenzwerte in eine bestimmte Routine zu verzweigen ist,
- und der Vorgang nach 2048 Messungen abgebrochen werden.

Eine derartige Anwendung erfordert bei einer reinen Softwarelösung einen relativ hohen Aufwand. Da ein typischer A/D-Wandler (beispielsweise ein in einem Mikrocontroller integrierter A/D-Wandler) in der Regel nicht spontan das Ergebnis liefert, also als sogenannter Flash-Wandler arbeitet und eine Wandlungszeit im Bereich einiger Mikrosekunden besitzt, muß bei exakter Ausführung der Anwendungsspezifikation einer der folgenden Wege beschritten werden:
1) Der Timer löst einen Interrupt aus. Die Interrupt-Serviceroutine startet die A/D-Wandlung und wird dann beendet. Der A/D-Wandler löst bei Beendigung der Wandlung ebenfalls einen Interrupt aus. Durch die daraufhin ausgeführte Interrupt-Serviceroutine wird das A/D-Wandlungsergebnis ausgelesen und verarbeitet.
2) Der Timer löst einen Interrupt aus. In der daraufhin ausgeführten Interrupt-Serviceroutine wird die A/D-Wandlung gestartet, auf das Wandlungsende gewartet, und schließlich (nach dem Wandlungsende) das A/D-Wandlungsergebnis ausgelesen und verarbeitet.

Wenn die Wandlungszeiten kürzer als die Interrupt-Latenzzeiten sind, ist der zweiten Variante der Vorzug zu geben. Ansonsten wäre die erste Variante zu bevorzugen. Am günstigsten ist jedoch - jedenfalls bei Ausführung in einem "normalen" Mikroprozessor oder Mikrocontroller - im allgemeinen die folgende dritte Variante:
3) Der Timer löst einen Interrupt aus. In der daraufhin ausgeführten Interrupt-Serviceroutine wird das letzte A/D-Wandlungsergebnis ausgelesen, die nächste A/D-Wandlung gestartet, und das ausgelesene A/D-Wandlungsergebnis ausgewertet.

Dann erfolgt das Lesen und Auswerten des A/D-Wandlungsergebnis allerdings in der Regel später als es eigentlich möglich wäre.

Möchte man das Auslesen, das Auswerten und das Speichern der A/D-Wandlungsergebnisse durch einen UCB erledigen lassen, so würde man diesen vorzugsweise entsprechend dem folgenden C-Programm konfigurieren. Wie später noch besser verstanden werden wird, kann dadurch mit minimalem Aufwand und mit minimaler Belastung des den UCB enthaltenden Systems ein sofort nach dem A/D-Wandlungsende einsetzendes Auslesen, Auswerten und Speichern des A/D-Wandlungsergebnisses durchgeführt werden. Im folgenden C-Programm wird ein neues Schlüsselwort "hardware_thread" verwendet. Über dieses Schlüsselwort, das selbstverständlich auch beliebig anders lauten kann, soll dem das C-Programm übersetzenden Compiler signalisiert werden, daß er das betreffende Programm oder den betreffenden Programmabschnitt so kompilieren soll, daß der erzeugte Code möglichst effizient in einem UCB ausführbar ist. Die Verwendung eines solchen Schlüsselwortes ist jedoch nicht zwingend erforderlich. Es könnte auch vorgesehen werden, daß der Compiler die zu kompilierenden Programme von Haus aus so kompiliert, daß sie in UCBs zur Ausführung gebracht werden können.

```
 int *p_adc, adc_value, upper_limit, lower_limit, adc_ready;
 int adc_array(4096);
 ...
 void hardware_thread readAD()
 {
      int x = 0;
      while (x < 4096)
      {
            if (adc_ready == 1)
            {
                // Zugriff auf A/D-Wandler
                adc_value = *p_adc;

                // Aufruf der Routine out_of_range bei
                // Grenzwertüberschreitung
                if (adc_value > upper_limit II
                    adc_value < lower_limit) out_of_range();

                // Speichern der Index-Information
                adc_array[x++] = x;
                // Speichern des Wandlungsergebnisses
                adc_array[x++] = adc_value;
            }
      }
 }
```

Dieser Source-Code kann bei Verwendung der vorstehend genannten Befehlstypen in folgenden Assembler-Code übersetzt werden:

| | | |
|---|---|---|
| | mov r1, p_adc | ; Adresse des A/D-Wandlers -> r1 |
| | mov r4, 0 | ; Variable x -> r4 |
| | mov r5, 1 | ; x+1 -> r5 |
| | mov r6, adc_array | ; Speicherfeldadresse -> r6 |
| | ld r2, upper_limit | ; oberer Grenzwert -> r2 |
| | ld r3, lower_limit | ; unterer Grenzwert -> r3 |
| LO: | ld r0, (r1) | ; A/D-Wandlungsergebnis wird geladen |
| | intgt r0, r2, i1 | ; Meldesignal INT1 (Interrupt |
| | | ; Request 1) erzeugen, wenn r0 > r2 |
| | intlt r0, r3, i2 | ; Meldesignal INT2 (Interrupt |
| | | ; Request 2) erzeugen, wenn r0 < r3 |
| | st (r6+r4), r4 | ; Zählmarken-Speicherung |
| | st (r6+r5), r0 | ; A/D-Wandlungsergebnis -> r0 |
| | add r4, r4, 2 | ; Aktualisierung von x |
| | add r5, r5, 2 | ; Aktualisierung von x+1 |
| | looplt r4, 4096 | ; Wiederholung ab L0, |
| | | wenn r4 < 4096 |

Dabei betreffen die ersten 6 Instruktionen die Initialisierung der Register, und die nachfolgenden (ab dem Label L0 kommenden) Instruktionen die Ausführung der durch das vorstehende C-Programm zu bewirkenden Aktionen.

Zwar fehlt im Assembler-Code die Bedingung, daß die Schleife nur bei Vorliegen des ADC_READY-Signals durchlaufen werden darf, doch kommt man bei der Umsetzung des Assemblerprogramms in eine UCB-Struktur und Ausführung durch den UCB dennoch zum gleichen Ergebnis wie bei "normaler" Übersetzung des C-Programms und Ausführung desselben in einem herkömmlichen Mikroprozessor oder Mikrocontroller. Die im Assembler-Code fehlende Bedingung stellt nämlich quasi eine Triggerung dar, die auch durch das der Taktgenerierungs-Einheit TGU des UCB zugeführte Enable-Signal ENABLE bewerkstelligbar ist.

Setzt man den Assembler-Code in eine UCB-Struktur um, durch welche die zu bewirkenden Aktionen vorgenommen werden, so gelangt man zu der in Figur 2 gezeigten UCB-Struktur.

Der in der Figur 2 gezeigte UCB umfaßt vier als Addierer konfigurierte arithmetische Einheiten AU1, AU2, AU3, AU4, eine Taktgenerierungs-Einheit TGU, und eine drei Vergleichs-Einheiten CUB1, CUB2, CUB3 umfassende Signalisierungs-Einheit SU. Die Struktur des UCB basiert erkennbar auf der in der Figur 1 veranschaulichten allgemeinen Struktur von UCBs; es fand lediglich eine Anpassung an den konkreten Anwendungsfall statt. Die Verschaltung der Teileinheiten des UCB sowie deren Ein- und Ausgangssignale sind der Figur 2 selbst entnehmbar und bedürfen keiner weiteren Erläuterung. Es ist ohne weiteres nachvollziehbar, daß ein so konfigurierter UCB genau das tut, was durch den vorstehenden Assembler-Code (das vorstehende C-Programm) definiert ist.

Es dürfte einleuchten, daß der so konfigurierte UCB die zu bewältigende Aufgabe völlig selbständig (ohne Belastung einer über- oder nebengeordneten Steuereinrichtung) und erheblich schneller als ein herkömmlicher Mikroprozessor oder Mikrocontroller ausführen kann.

Es dürfte ferner einleuchten, daß der Einsatz des UCB keinesfalls auf die vorstehend erwähnten Beispiele beschränkt ist. UCBs lassen sich selbstverständlich für unzählige andere Zwecke einsetzen. Unter den weiteren Einsatzmöglichkeiten seien deren Einsetzbarkeit beim Chiptest oder in Kryptografie- und Identifikations-Anwendungen besonders hervorgehoben. Die Durchführung derartiger Aufgaben läßt sich unter Verwendung von UCBs mit besonders geringem Aufwand und gleichzeitig besonders flexibel realisieren.

Mit den erwähnten Chiptests sind insbesondere solche Chiptests gemeint, die unter Verwendung von in der zu testenden integrierten Schaltung untergebrachten Testmodulen erfolgen, also vor allem der Memory Build in Selftest (MBIST), Linear Feedback Shift Register (LFSR), Multiple Input Signature Register (MISR), Memory Build in Self Repair (MBISR), Analog BIST (beispielsweise bei Analog/Digital-Wandlern) und On Chip Monitore (z.B. Strommeß-Monitore für IDDQ) etc. Die zu testenden integrierten Schaltungen können dabei beliebige integrierte Schaltungen sein, also beispielsweise Mikroprozessoren, Mikrocontroller, Speicherbausteine, A/D-Wandler etc. Die vorstehend genannten und andere Testverfahren, für die in dem zu testenden Chip spezielle Testmodule vorgesehen werden müssen, sind wegen des nicht unerheblichen Aufwandes für die Integration solcher Testmodule in den zu testenden Chip (mehr Chipfläche, höherer Herstellungspreis etc.) derzeit noch nicht allzuweit verbreitet. Hier kann die Chiptest-Durchführung unter Verwendung von UCBs Abhilfe schaffen. Der UCB, unter Verwendung dessen der Chiptest durchgeführt wird (der als Chiptest-Modul verwendet wird) kann nämlich vor und/oder nach dem Chiptest andere Aufgaben übernehmen, beispielsweise als serielle oder parallele Schnittstelle konfiguriert werden. Dann können die vorstehend genannten oder andere Chiptests durchgeführt werden, ohne daß in dem zu testenden Chip ein spezielles Chiptest-Modul vorgesehen ist. Bei geeigneter Ausbildung und Dimensionierung des UCB ist der Chiptest keinerlei Beschränkungen unterworfen; die Funktionalität des UCB in Bezug auf Chiptests kann der Funktionalität von speziellen Chiptest-Modulen voll entsprechen. Chiptests unter Verwendung von UCBs werden sich im allgemeinen sogar schneller durchführen lassen als Chiptests unter Verwendung von speziellen Chiptest-Modulen. Der Grund hierfür liegt darin, daß spezielle Chiptest-Module aus Platz- und Kostengründen einen möglichst einfachen Aufbau aufweisen, wodurch die Durchführung des Chiptests mitunter nicht maximal schnell erfolgen kann. Dies ist beim UCB, unter Verwendung dessen ein Chiptest durchgeführt wird, anders. UCBs sind ja von Haus aus für eine universelle Einsetzbarkeit ausgelegt und können dadurch im allgemeinen auch ohne eine besondere Ausbildung jeweils optimal an die ihnen übertragenen Aufgaben angepaßt werden. Durch UCBs können grundsätzlich beliebige analoge, synchrone digitale und asynchrone digitale Schaltungen realisiert werden. Der Einsatz eines UCB für Chiptests erweist sich darüber hinaus auch deshalb als vorteilhaft, weil sich damit jederzeit problemlos Veränderungen des Testverfahrens durchführen lassen; Veränderungen können beispielsweise erforderlich sein, um Fehler in Testverfahren zu beseitigen oder das Testverfahren auf den neuesten Stand zu bringen. Der zum Chiptest verwendete UCB selbst kann beispielsweise durch einen sogenannten Scan-Test getestet werden.

Es wurden bereits praktische Tests durchgeführt, bei welchen ein MBIST-Controller für statische RAMs durh einen UCB realisiert wurde. Die Ergebnisse waren hervorragend.

Daß sich die durch UCBs realisierten Schaltungen jederzeit problemlos verändern lassen, macht die UCBs auch für Kryptografie- und Identifikations-Anwendungen so interessant. Damit können nämlich erforderliche Identifikationsdatenveränderungen und/oder notwendige Krypto-Code-Veränderungen (beispielsweise nach einem Hacker-Angriff) durch eine bloße Umkonfigurierung des UCB, also auf denkbar einfache Art und Weise durchgeführt werden; beim Endkunden befindliche Smart Cards, Mifares oder Wegfahrsperren müssen nicht ersetzt werden.

Weitere Vorteile der Verwendung von UCBs für Kryptografie- und Identifikations-Anwendungen bestehen darin, daß sich UCBs schneller und öfter umprogrammieren lassen als andere konfigurierbare Hardware wie etwa die sogenannten FPGAs; UCBs sind darüber hinaus auch kleiner und auch flächeneffizienter als FPGAs.

UCBs lassen sich selbstverständlich auch für andere Anwendungen einsetzen und können dabei unabhängig von der Art der Anwendung in verschiedenen Betriebsphasen der den UCB enthaltenden Vorrichtung verschiedene Funktionen erfüllen, wobei die Funktionen durch entsprechende Festlegung der Konfigurationsdaten bzw. Konfigurationsdatenfolgen mit minimalem Aufwand an die individuellen Bedürfnisse des Benutzers anpaßbar sind. So kann beispielsweise - um nur eines von beliebig vielen Beispielen zu nennen - vorgesehen werden, daß ein UCB nach dem Einschalten eines diesen enthaltenden Chips als Chiptest-Modul verwendet wird, und danach, d.h. im "normalen" Betrieb des Chips wahlweise als serielle Schnittstelle oder als intelligente parallele Schnittstelle verwendet wird.

Beim praktischen Einsatz von UCBs kann es sich als vorteilhaft erweisen, wenn dieser über Möglichkeiten zur temporären Zwischenspeicherung von Daten verfügt. Hierfür wird vorzugsweise innerhalb des UCB ein Speicher, beispielsweise ein Schreib/Lesespeicher (RAM) vorgesehen. Dieser Speicher ist vorzugsweise als Speicher mit wahlfreiem Zugriff oder als Stackspeicher ausgebildet und muß nur von dem diesen enthaltenden UCB zugänglich sein. Selbstverständlich kann bei Bedarf vorgesehen werden, daß auch andere Komponenten des den UCB enthaltenden Systems Zugriff auf diesen Speicher haben.

Die Synthese von UCBs kann unter Verwendung einer Schaltungsbeschreibungssprache wie beispielsweise VHDL erfolgen; die Konfigurationsdaten zur wunschgemäßen Konfigurierung des UCB können beispielsweise basierend auf einem Assemblerpogramm, einem C-Programm oder einer (ebenfalls in einer Schaltungsbeschreibungssprache wie VHDL erfolgten) Schaltungsbeschreibung generiert werden.

Der beschriebene Hardware-Block (UCB) erweist sich nach alledem in mehrfacher Hinsicht als vorteilhaft: er ist leistungsfähiger und flexibler und universeller einsetzbar als es bei herkömmlichen Hardware-Blöcken der betrachteten Art der Fall ist.

### Bezugszeichenliste

- 1: predecode unit
- 2: instruction buffer
- 3: decode, rename & load unit
- 4: s-unit
- 5: data cache
- 6: memory interface

- 41: programmable structure buffer
- 42: functional unit with programmable structure
- 43: integer/address instruction buffer
- 44: integer register file

- AUx: arithmetische Einheit
- CUA: Vergleichs-Einheit des ersten Typs
- CUBx: Vergleichs-Einheit des zweiten Typs
- DEMUX: Demultiplexer
- MUXAx: Multiplexer des ersten Typs
- MUXB: Multiplexer des zweiten Typs
- TGU: Taktgenerierungs-Einheit
- SU: Signalisierungs-Einheit

- MCLK: Master-Takt
- ENABLE: Enable-Signal
- ADC_READY: Ready-Signal eines A/D-Wandlers
- CLK: von TGU erzeugtes Taktsignal

- READY: Ready-Signal des Hardware-Blocks
- INT1: Interrupt Request 1 des Hardware-Blocks
- INT2: Interrupt Request 2 des Hardware-Blocks

- LPL: Load-Pipeline
- SPL: Store-Pipeline

- A: Adressen
- D: Daten

## Patentansprüche

1. Konfigurierbarer Hardware-Block, der dazu ausgelegt ist, abhängig von seiner Konfiguration in einer Speichereinrichtung (44) gespeicherte Daten auszulesen, die ausgelesenen Daten arithmetisch und/oder logisch zu verarbeiten, und das Ergebnis der Verarbeitung repräsentierende Daten in die Speichereinrichtung einzuschreiben, und der in die Lage versetzbar ist, mit externer Hardware zu interagieren,
- wobei die Interaktion mit der externen Hardware darin besteht, daß die Speichereinrichtung (44) im Ansprechen auf bestimmte Ereignisse von der externen Hardware bereitgestellte Daten übernimmt, und/oder gespeicherte Daten an die externe Hardware ausgibt,
- wobei das Einschreiben von Daten in die Speichereinrichtung (44) und das Auslesen von Daten aus der Speichereinrichtung (44) im Takt von durch eine Taktgenerierungs-Einheit (TGU) erzeugten Taktsignalen (CLK) erfolgt,
- wobei die Taktgenerierungs-Einheit die Taktsignale in Abhängigkeit von einem oder mehreren periodischen oder nicht periodischen Signalen (MCLK, ENABLE; MCLK, ADC_READY) erzeugt, die zumindest teilweise von der externen Hardware stammen, und
- wobei die Signale, in Abhängigkeit von welchen die Taktgenerierungs-Einheit die Taktsignale erzeugt, wenigstens ein Signal umfassen, das von einer externen Hardware-Komponente stammt, mit welcher der konfigurierbare Hardware-Block interagieren soll.

2. Konfigurierbarer Hardware-Block, der dazu ausgelegt ist, abhängig von seiner Konfiguration in einer Speichereinrichtung (44) gespeicherte Daten auszulesen, die ausgelesenen Daten arithmetisch und/oder logisch zu verarbeiten, und das Ergebnis der Verarbeitung repräsentierende Daten in die Speichereinrichtung einzuschreiben, und der in die Lage versetzbar ist, mit externer Hardware zu interagieren,
**dadurch gekennzeichnet,**
**daß** eine Signalisierungs-Einheit (SU) zur Erzeugung von Meldesignalen (READY, INT1, INT2) für die externe Hardware vorgesehen ist, und daß durch die Meldesignale (READY, INT1, INT2) das Auftreten vorbestimmter Zustände und/oder Ereignisse im konfigurierbaren Hardware-Block signalisiert wird.

3. Konfigurierbarer Hardware-Block nach Anspruch 2,
**dadurch gekennzeichnet,**
**daß** die Signalisierungs-Einheit (SU) dazu ausgelegt ist, durch ein von ihr erzeugtes Meldesignal (READY, INT1, INT2) zu signalisieren, daß eine im Hardware-Block wiederholt auszuführende Operation oder Operationsfolge eine gewünschte Anzahl von Malen ausgeführt wurde.

4. Konfigurierbarer Hardware-Block nach Anspruch 2,
**dadurch gekennzeichnet,**
**daß** die Signalisierungs-Einheit (SU) dazu ausgelegt ist, bei Bedarf ein als Interrupt Request für eine programmgesteuerte Einheit verwendbares Meldesignal (READY, INT1, INT2) zu generieren.

5. Konfigurierbarer Hardware-Block nach Anspruch 2,
**dadurch gekennzeichnet,**
**daß** das Meldesignal (READY, INT1, INT2) das Ausgangssignal mindestens einer Vergleichs-Einheit (CUB; CUB1, CUB2, CUB3) ist.

6. Konfigurierbarer Hardware-Block nach Anspruch 5,
**dadurch gekennzeichnet,**
**daß** die Vergleichs-Einheiten (CUB; CUB1, CUB2, CUB3) zumindest teilweise konfigurierbare Vergleichs-Einheiten sind, die eingegebene Signale auswählbaren Vergleichsoperationen und/oder Überprüfungen auf WAHR und/oder UNWAHR unterziehen können.

7. Konfigurierbarer Hardware-Block nach Anspruch 6,
**dadurch gekennzeichnet,**
**daß** die auswählbaren Vergleichsoperationen Größer-, Größer/Gleich-, Gleich-, Ungleich-, Kleiner-, und/oder Kleiner/Gleich-Vergleiche umfassen.

8. Konfigurierbarer Hardware-Block nach einem der Ansprüche 5 bis 7,
**dadurch gekennzeichnet,**
**daß** den Vergleichs-Einheiten (CUB; CUB1, CUB2, CUB3) zumindest teilweise eingangsseitig ein Multiplexer (MUXA4) vorgeschaltet ist, durch den festlegbar ist, welche Signale den Vergleichs-Einheiten als Eingangssignale zugeführt werden.

9. Konfigurierbarer Hardware-Block nach einem der vorhergehenden Ansprüche,
**dadurch gekennzeichnet,**
**daß** der konfigurierbare Hardware-Block funktionsmäßig konfigurierbare Teileinheiten (AUx, CUx, DEMUX, MUXx) und/oder konfigurierbare Daten- und/oder Signalpfade aufweist.

10. Konfigurierbarer Hardware-Block nach Anspruch 9,
**dadurch gekennzeichnet,**
**daß** konfigurierbare Daten- und/oder Signalpfade zur externen Hardware existieren oder herstellbar sind.

11. Konfigurierbarer Hardware-Block nach einem der vorhergehenden Ansprüche,
**dadurch gekennzeichnet,**
**daß** die Speichereinrichtung (44) ein eine Vielzahl von Registern umfassender Registerblock ist.

12. Konfigurierbarer Hardware-Block nach einem der vorhergehenden Ansprüche,
**dadurch gekennzeichnet,**
**daß** der Hardware-Block basierend auf Befehlen oder Befehlsfolgen konfigurierbar ist, so daß er die durch die Befehle oder Befehlsfolgen vorgegebenen Operationen oder Operationsfolgen ausführen kann.

13. Konfigurierbarer Hardware-Block nach Anspruch 12,
**dadurch gekennzeichnet,**
**daß** der Hardware-Block so dimensioniert ist, daß dessen Konfigurierung hyperblockweise erfolgen kann.

14. Konfigurierbarer Hardware-Block nach einem der vorhergehenden Ansprüche,
**dadurch gekennzeichnet,**
**daß** der Hardware-Block so aufgebaut und konfigurierbar ist, daß er als Ersatz für eine spezielle Schaltung verwendbar ist.

15. Konfigurierbarer Hardware-Block nach einem der vorhergehenden Ansprüche,
**dadurch gekennzeichnet,**
**daß** der Hardware-Block so aufgebaut und konfigurierbar ist, daß er als Ersatz für verschiedene spezielle Schaltungen verwendbar ist.

16. Konfigurierbarer Hardware-Block nach Anspruch 14 oder 15,
**dadurch gekennzeichnet,**
**daß** der Hardware-Block zum Testen einer diesen enthaltenden integrierten Schaltung verwendet wird.

17. Konfigurierbarer Hardware-Block nach einem der Ansprüche 14 bis 16,
**dadurch gekennzeichnet,**
**daß** der Hardware-Block für Kryptografie- und/oder Identifikationsanwendungen verwendet wird.

18. Konfigurierbarer Hardware-Block nach einem der vorhergehenden Ansprüche,
**dadurch gekennzeichnet,**
**daß** die Speichereinrichtung (44) zum Speichern von Zwischenergebnissen dient.

## Claims

1. Configurable hardware block, which is designed, depending on its configuration, to read data stored in a memory unit (44), process this data arithmetically and/or logically, and write data representing the result of this processing to the memory unit, and which can be made capable of interacting with external hardware,
- where the interaction with the external hardware consists in that the memory unit (44) accepts data supplied by the external hardware in response to specific events, and/or outputs stored data to the external hardware,
- where data are written to the memory unit (44) and data are read from the memory unit (44) in time with clock signals (CLK) generated by a clock generation unit (TGU),
- where the clock generation unit generates the clock signals depending on one or more periodic or non-periodic signals (MCLK, ENABLE; MCLK, ADC_READY), which originate at least to some extent from the external hardware, and
- where the signals which the clock generation unit takes as a basis for generating the clock signals comprise at least one signal which originates from an external hardware component with which the configurable hardware block is intended to interact.

2. Configurable hardware block which is designed, depending on its configuration, to read data stored in a memory unit (44), process this data arithmetically and/or logically, and write data representing the result of this processing to the memory unit, and which can be made capable of interacting with external hardware,
**characterized in that**:
a signalling unit (SU) is provided to generate report signals (READY, INT1, INT2) for the external hardware, and the report signals (READY, INT1, INT2) are used to signal the occurrence of predefined states and/or events in the configurable hardware block.

3. Configurable hardware block as claimed in Claim 2,
**characterized in that**:
the signalling unit (SU) is designed to signal, by means of a report signal (READY, INT1, INT2) it has generated, that an operation or sequence of operations to be executed repeatedly in the hardware block has been executed a specified number of times.

4. Configurable hardware block as claimed in Claim 2,
**characterized in that**:
the signalling unit (SU) is designed to generate a report signal (READY, INT1, INT2) as required, which can be used as an interrupt request for a program-controlled unit.

5. Configurable hardware block as claimed in Claim 2,
**characterized in that**:
the report signal (READY, INT1, INT2) is the output signal of at least one comparison unit (CUB; CUB1, CUB2, CUB3).

6. Configurable hardware block as claimed in Claim 5,
**characterized in that**:
at least some of the comparison units (CUB; CUB1, CUB2, CUB3) are configurable comparison units, which can subject incoming signals to selectable compare operations and/or checks for TRUE and/or UNTRUE.

7. Configurable hardware block as claimed in Claim 6,
**characterized in that**:
the selectable compare operations include greater than, greater than or equal to, not equal to, smaller than, and/or smaller than or equal to comparisons.

8. Configurable hardware block as claimed in Claims 5 to 7,
**characterized in that**:
at least some of the comparison units (CUB; CUB1, CUB2, CUB3) have a multiplexer (MUXA4) series-connected on the input side of the comparison unit, which can determine which signals are supplied to the comparison unit as input signals.

9. Configurable hardware block as claimed in one of the above claims,
**characterized in that**:
the configurable hardware block includes sub-units (AUx, CUx, DEMUX, MUXx) that can be configured according to the function required, and/or configurable data and/or signal paths.

10. Configurable hardware block as claimed in Claim 9,
**characterized in that**:
configurable data and/or signal paths to the external hardware exist or can be established.

11. Configurable hardware block as claimed in one of the above claims,
**characterized in that**:
the memory unit (44) is a register block containing numerous registers.

12. Configurable hardware block as claimed in one of the above claims,
**characterized in that**:
the hardware block can be configured on the basis of instructions or instruction sequences, so that it can execute the operations or operation sequences as specified by the instructions or instruction sequences.

13. Configurable hardware block as claimed in Claim 12,
**characterized in that**:
the hardware block is dimensioned in such a way that it can be configured by hyperblock.

14. Configurable hardware block as claimed in one of the above claims,
**characterized in that**:
the hardware block is constructed and configurable so that it can be used to replace a specific circuit.

15. Configurable hardware block as claimed in one of the above claims,
**characterized in that**:
the hardware block is constructed and configurable so that it can be used to replace various specific circuits.

16. Configurable hardware block as claimed in Claim 14 or 15,
**characterized in that**:
the hardware block is used to test an integrated circuit containing the hardware block.

17. Configurable hardware block as claimed in one of the Claims 14 to 16,
**characterized in that**:
the hardware block is used for cryptography and/or identification applications.

18. Configurable hardware block as claimed in one of the above claims,
**characterized in that**:
the memory unit is used to store interim results.

## Revendications

1. Bloc matériel configurable qui est conçu, en fonction de sa configuration, pour charger les données enregistrées dans un dispositif de mémorisation (44), effectuer un traitement arithmétique et/ou logique des données chargées et écrire les données représentant le résultat du traitement dans le dispositif de mémorisation et qui peut être mis dans une situation où il peut interagir avec un matériel externe,
- l'interaction avec le matériel externe consistant en ce que le dispositif de mémorisation (44), en réaction à certains événements, prend en charge les données fournies par le matériel externe et/ou délivre les données enregistrées au matériel externe,
- l'écriture de données dans le dispositif de mémorisation (44) et le chargement de données depuis le dispositif de mémorisation (44) s'effectuant au rythme des signaux d'horloge (CLK) générés par une unité génératrice d'horloge (TGU),
- l'unité génératrice d'horloge produisant les signaux d'horloge en fonction d'un ou de plusieurs signaux périodiques ou non périodiques (MCLK, ENABLE; MCLK, ADC_READY) qui proviennent au moins partiellement du matériel externe, et
- les signaux en fonction desquels l'unité génératrice d'horloge produisant les signaux d'horloge comprenant au moins un signal qui provient d'un composant matériel externe avec lequel doit interagir le bloc matériel configurable.

2. Bloc matériel configurable qui est conçu, en fonction de sa configuration, pour charger les données enregistrées dans un dispositif de mémorisation (44), effectuer un traitement arithmétique et/ou logique des données chargées et écrire les données représentant le résultat du traitement dans le dispositif de mémorisation et qui peut être mis dans une situation où il peut interagir avec un matériel externe, **caractérisé en ce qu'**il est prévu une unité de signalisation (SU) pour produire des signaux de notification (READY, INT1, INT2) pour le matériel externe et que les signaux de notification (READY, INT1, INT2) signalent la survenance d'état et/ou d'événements donnés dans le bloc matériel configurable.

3. Bloc matériel configurable selon la revendication 2, **caractérisé en ce que** l'unité de signalisation (SU) est conçue pour signaler par l'un des signaux de notification (READY, INT1, INT2) qu'elle produit qu'une opération ou une série d'opérations à réaliser de manière répétitive dans le bloc matériel a été exécutée un nombre de fois souhaité.

4. Bloc matériel configurable selon la revendication 2, **caractérisé en ce que** l'unité de signalisation (SU) est conçue pour générer, au besoin, un signal de notification (READY, INT1, INT2) pouvant être utilisé comme requête d'interruption pour une unité commandée par programme.

5. Bloc matériel configurable selon la revendication 2, **caractérisé en ce que** le signal de notification (READY, INT1, INT2) est le signal de sortie d'au moins une unité de comparaison (CUB ; CUB1, CUB2, CUB3).

6. Bloc matériel configurable selon la revendication 5, **caractérisé en ce que** les unités de comparaison (CUB ; CUB1, CUB2, CUB3) sont des unités de comparaison qui sont au moins partiellement configurables qui peuvent soumettre les signaux injectés à des opérations de comparaison et/ou à des contrôles d'état VRAI et/ou FAUX.

7. Bloc matériel configurable selon la revendication 6, **caractérisé en ce que** les opérations de comparaison pouvant être sélectionnées comprennent des comparaisons Supérieur, Supérieur ou égal, Égal, Différent de, Inférieur et/ou Inférieur ou égal.

8. Bloc matériel configurable selon l'une des revendications 5 à 7, **caractérisé en ce que** les unités de comparaison (CUB ; CUB1, CUB2, CUB3) sont au moins partiellement précédées au niveau de leur entrée par un multiplexeur (MUXA4) qui permet de définir les signaux qui sont acheminés aux unités de comparaison en tant que signaux d'entrée.

9. Bloc matériel configurable selon l'une des revendications précédentes, **caractérisé en ce que** le bloc matériel configurable présente des unités partielles à fonctionnalité configurable (AUx, CUx, DEMUX, MUXx) et/ou des trajets de données et/ou de signaux configurables.

10. Bloc matériel configurable selon la revendication 9, **caractérisé en ce que** des trajets de données et/ou de signaux configurables existent ou peuvent être établis vers le matériel externe.

11. Bloc matériel configurable selon l'une des revendications précédentes, **caractérisé en ce que** le dispositif de mémorisation (44) est un bloc de registres comprenant une pluralité de registres.

12. Bloc matériel configurable selon l'une des revendications précédentes, **caractérisé en ce que** le bloc matériel peut être configuré en se basant sur des instructions ou des séries d'instructions de manière à ce qu'il puisse exécuter les opérations ou les séries d'opérations prédéfinies par les instructions ou les séries d'instructions.

13. Bloc matériel configurable selon la revendication 12, **caractérisé en ce que** le bloc matériel est dimensionné de telle sorte que sa configuration peut être réalisée à la manière d'un hyperbloc.

14. Bloc matériel configurable selon l'une des revendications précédentes, **caractérisé en ce que** le bloc matériel est construit et configurable de telle sorte qu'il peut être utilisé en remplacement d'un circuit spécial.

15. Bloc matériel configurable selon l'une des revendications précédentes, **caractérisé en ce que** le bloc matériel est construit et configurable de telle sorte qu'il peut être utilisé en remplacement de différents circuits spéciaux.

16. Bloc matériel configurable selon la revendication 14 ou 15, **caractérisé en ce que** le bloc matériel est utilisé pour tester un circuit intégré qui le contient.

17. Bloc matériel configurable selon l'une des revendications 14 à 16, **caractérisé en ce que** le bloc matériel est utilisé pour des applications de cryptographie et/ou d'identification.

18. Bloc matériel configurable selon l'une des revendications précédentes, **caractérisé en ce que** le dispositif de mémorisation (44) sert à mémoriser des résultats intermédiaires.
